# EUROPÄISCHE PATENTSCHRIFT

(11) **EP 1 157 767 B1**
(45) Veröffentlichungstag und Bekanntmachung des Hinweises auf die Patenterteilung: **19.11.2003**
(21) Anmeldenummer: 00110773.9
(22) Anmeldetag: 20.05.2000
(51) Int. Cl.: B23B 31/10, B23B 31/16

(54) **Spannfutter**
Chuck
Mandrin de serrage

(43) Veröffentlichungstag der Anmeldung: 28.11.2001
(73) Patentinhaber: Forkardt Deutschland GmbH, 40699 Erkrath (DE)
(72) Erfinder: Kempken, Rainer, 40699 Erkrath (DE)
(74) Vertreter: LENZING GERBER

(56) Entgegenhaltungen:
- DE-A- 2 949 566
- DE-C- 4 016 775

## Beschreibung

Die Erfindung betrifft ein kraftbetätigtes Keilstangenfutter für Drehmaschinen mit in einem Futterkörper tangential geführten Keilstangen, die durch einen Antrieb synchron beweglich und die über eine auf ihrer Vorderseite ausgebildete Verzahnung mit radial beweglich im Futterkörper geführten Spannbacken kuppelbar sind, wobei die Verzahnung jeder Keilstange über ihren Arbeitshub hinaus in eine Stellung beweglich ist, in der sie außer Eingriff mit der Spannbacke ist, so daß diese nach Lösen einer Sperreinrichtung radial aus dem Futterkörper herausnehmbar ist.

Derartige Keilstangenfutter sind aus der deutschen Auslegeschrift 27 36 753 sowie der deutschen Patentschrift 195 02 363 bekannt.

Bei dem aus der erstgenannten Druckschrift bekannten Spannfutter ist die Keilstange über einen ständig mittels einer Verzahnung mit ihr verbundenen Bolzen über den Arbeitshub hinaus verschiebbar, so daß die Spannbacke von der Verzahnung der Keilstange trennbar und aus dem Futterkörper herausnehmbar ist. Nachteil dieser Konstruktion ist, daß der Bolzen in ständigem Eingriff mit der Keilstange steht und somit auch bei deren Betätigung innerhalb des Arbeitshubes bewegt werden muß.

Auch bei der aus der DE-PS 195 02 363 bekannten Konstruktion dient ein in einer radialen Bohrung des Futterkörpers eingesetzter Verstellbolzen dazu, die Spannbacke über den Arbeitshub hinaus zu verschieben, in der die Verzahnungen von Keilstange und Spannbacke außer Eingriff sind, so daß die Spannbacke aus dem Futterkörper herausgenommen oder versetzt werden kann. Der Verstellbolzen ist in diesem Fall mit einem exzentrisch angeordneten Nocken versehen, der in eine Aussparung der Spannbacke eingreift. Der zur Betätigung dienende Schlüssel für den Verstellbolzen wird so lange im Futterkörper festgehalten, solange sich die Keilstange außer Eingriff mit der Spannbacke befindet.

Ein weiteres, dem Oberbegriff von Anspruch 1 zugrunde gelegtes Spannfutter, zeigt die Offenlegungsschrift DE 2 949 566 A. Dort wird der Entkupplungsvorgang der Spannbacken durch axiales Abheben des Abtriebs-bzw. Kupplungsteils der zweiteilig ausgeführten keilstangen verwirklicht.

Ausgehend von diesem bekannten Stand der Technik liegt der Erfindung die Aufgabe zugrunde, ein Keilstangenfutter der voranstehend als bekannt vorausgesetzten Art zu schaffen, das mit anderen, einfacheren Mitteln eine Überführung der in die Spannbacke eingreifenden Verzahnung über den Arbeitshub hinaus ermöglicht und preisgünstiger herstellbar ist.

Diese Aufgabenstellung wird durch die Merkmalskombination gemäss Anspruch 1 gelöst.

Das erfindungsgemäße weiterentwickelte Keilstangenfutter hat den Vorteil, daß der Antrieb die Keilstangen ausschließlich im Bereich des Arbeitshubes bewegt und daß an einem Ende des Arbeitshubes durch eine Relativbewegung des Abtriebsteils, welches die Verzahnung für die Spannbacke trägt, dieses in tangentialer Richtung in eine Stellung verschoben werden kann, in der die Verzahnung der Keilstange und der Spannbacke außer Eingriff gelangen.

Antriebsteil und Abtriebsteil der Keilstange sind innerhalb des Arbeitshubes durch ein Kupplungsstück formschlüssig gekuppelt, das am Ende des Arbeitshubes mittels des Schlüssels aus seiner Kupplungsposition herausbewegbar und durch den Schlüssel verdrehbar ist, wobei ein Mitnehmer in den Abtriebsteil eingreift. Auf diese Weise wird eine sichere Verbindung zwischen Abtriebsteil und Antriebsteil im Bereich des Arbeitshubes gewährleistet, die nur dann aufgehoben wird, wenn das Abtriebsteil relativ zum Antriebsteil in die Stellung überführt werden soll, in der die Spannbacke aus dem Futter herausgenommen wird.

Am Kupplungsstück ist gemäß einem weiteren Merkmal der Erfindung ein die Drehachse bildender Bolzen ausgebildet, der bei Erreichen des einen Endes des Arbeitshubes aus der entsprechenden Lagerbohrung des Antriebsteils heraustritt und in eine Aussparung des Futterkörpers eintreten kann.

Die Zeichnung zeigt ein Ausführungsbeispiel der Erfindung. Es zeigt:
- Fig. 1: eine Stirnansicht des Futters ohne Spannbacken,
- Fig. 2: einen Längsschnitt durch das Futter gemäß der Schnittlinie II-II mit eingezeichneter Spannbacke,
- Fig. 3: eine Teilansicht des Futterkörpers mit einer tangentialen Tasche, in der eine Keilstange im Bereich des Arbeitshubes gezeichnet ist,
- Fig. 4: eine der Fig. 3 entsprechende Darstellung, in der sich die Verzahnung in der Außereingriffsstellung befindet,
- Fig. 5: eine perspektivische Ansicht einer Keilstange in der Normalstellung,
- Fig. 6: ein Explosionsschaubild der Einzelteile gemäß Fig. 5,
- Fig. 7: die Keilstange in einer Stellung, in der das Abtriebsteil gegenüber dem Antriebsteil verschoben ist,
- Fig.8: eine Darstellung der Fig. 7 mit einem weggeschnittenen Teil des Abtriebsteils,

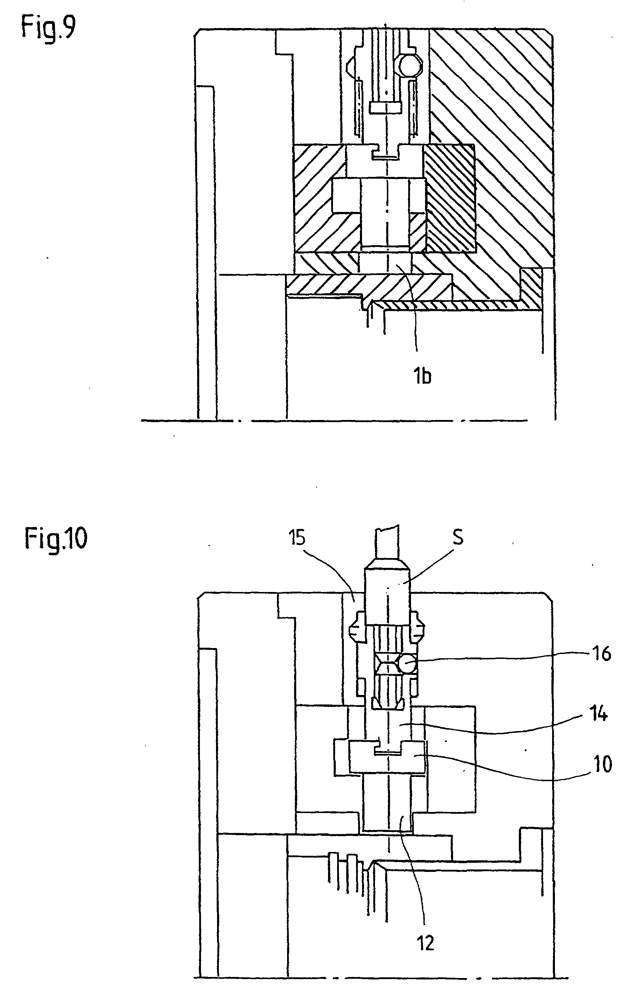

- Fig. 9: einen Teilschnitt durch das Futter gemäß der Schnittlinie IX-IX und
- Fig. 10: einen entsprechenden Teilschnitt mit eingesetztem Schlüssel.

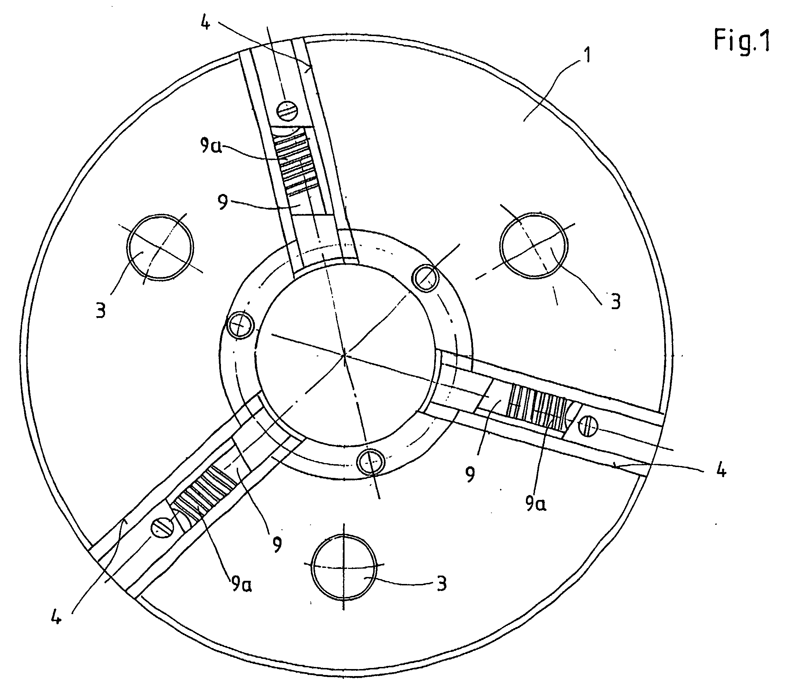

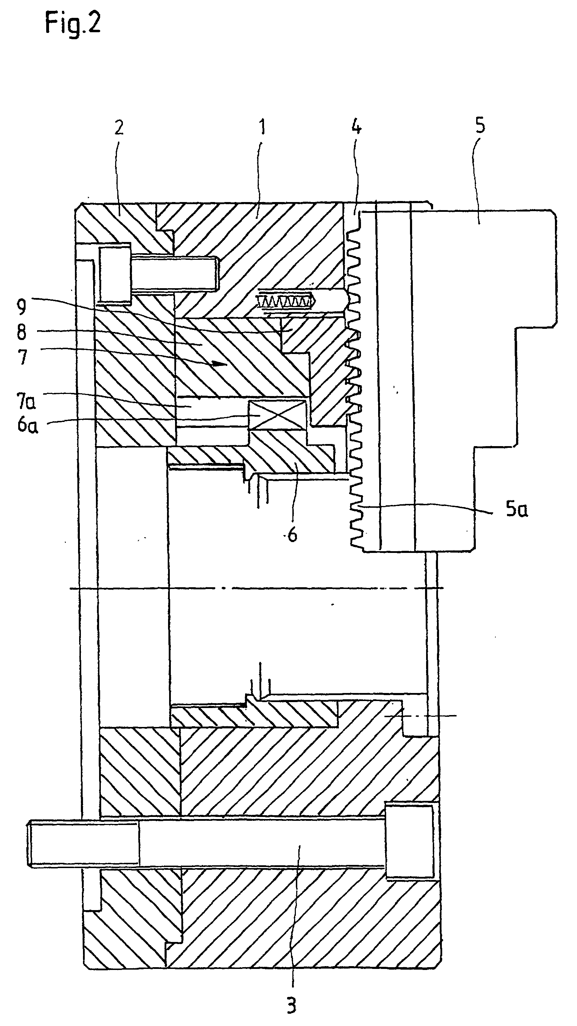

Das in den Fig. 1 und 2 dargestellte Spannfutter ist ein kraftbetätigtes Keilstangenfutter mit einem Futterkörper 1, der auf seiner Rückseite durch einen Deckel 2 verschlossen ist. Die Befestigung des Futters an der Spindel einer Werkzeugmaschine erfolgt mittels dreier Futterbefestigungsschrauben 3.

Im Futterkörper 1 sind drei radiale Führungen 4 ausgebildet, in denen jeweils eine Spannbacke 5 beweglich ist. Der besseren Übersicht wegen sind diese Spannbacken 5 in der Stirnansicht der Fig. 1 weggelassen.

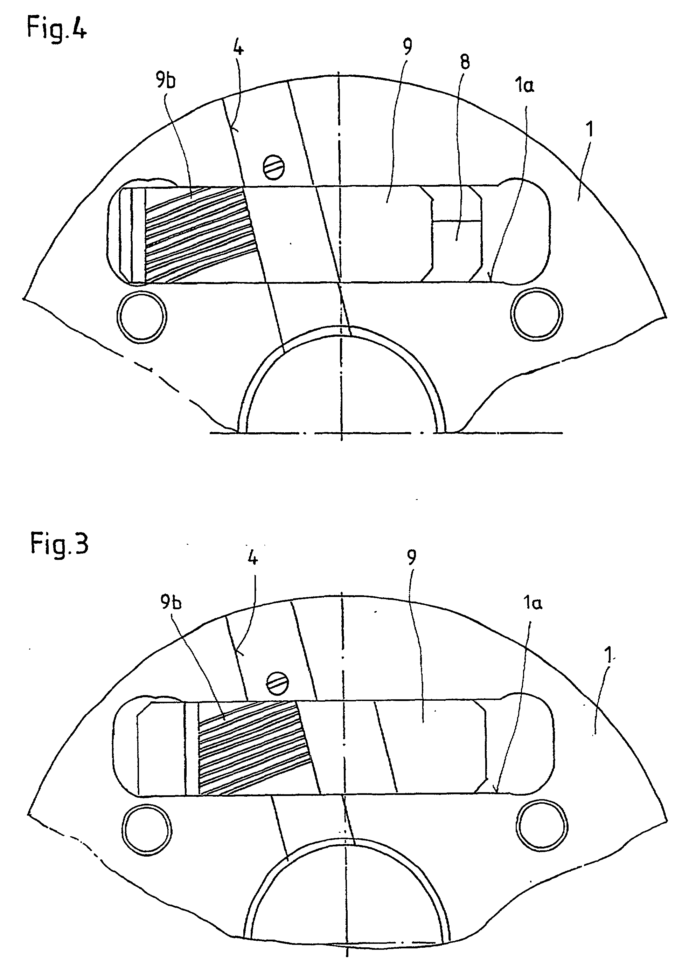

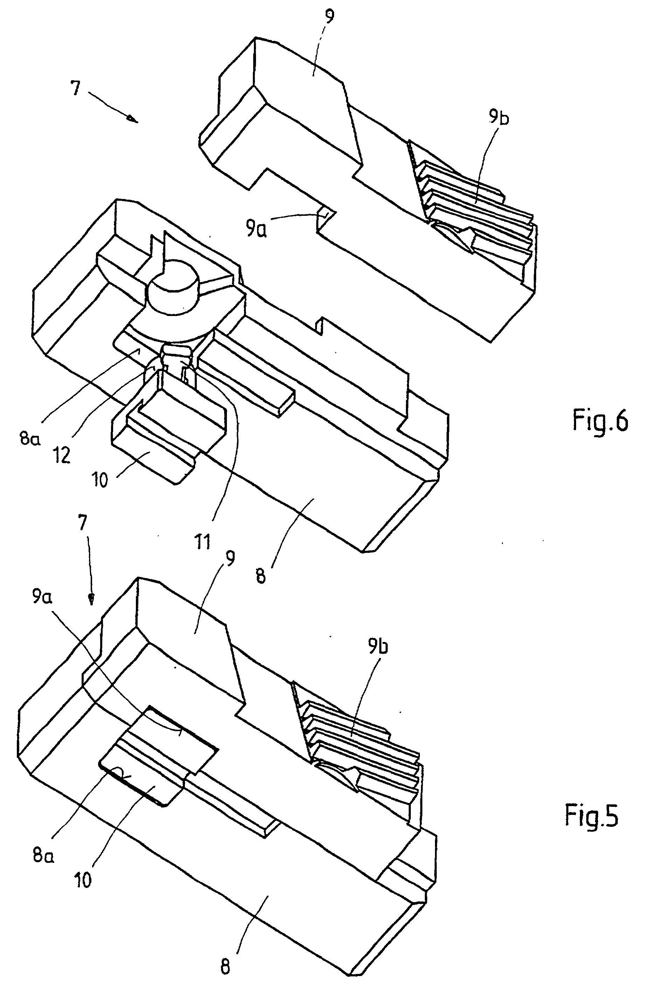

Zur radialen Verstellung der Spannbacken 5 dient ein Futterkolben 6, der durch eine axial bewegliche Kolbenstange, vorzugsweise eines Druckmittelzylinders, betätigbar ist. Der Spannkolben hat drei Keilhaken 6a, mit denen er in eine schräg zur Bewegungsrichtung liegende Nut 7a jeweils einer Keilstange 7 eingreift. Eine Axialbewegung des Kolbens 6 hat somit eine Tangentialbewegung der Keilstange 7 zur Folge, die in einer Tasche 1 a des Futterkörpers 1 angeordnet ist (siehe Fig. 3 und 4).

Die Keilstange 7 besteht gemäß den Fig. 5 bis 8 aus einem Antriebsteil 8 und einem Abtriebsteil 9, das relativ zum Antriebsteil 8 verschiebbar ist. In der Normalstellung sind Antriebsteil 8 und Abtriebsteil 9 durch ein Kupplungsstück 10 formschlüssig verbunden. Das Kupplungsstück 10 greift zu diesem Zweck in Aussparungen 8a und 9a ein. Dieser Normalfall ist in den Fig. 5 und 6 dargestellt.

Das Abtriebsteil 9 ist mit einer Keilverzahnung 9b versehen, welche in die Keilverzahnung 5a gemäß Fig. 2 der Spannbacke 5 eingreift. Die tangentiale Bewegung der Keilstange 7 hat somit eine Radialbewegung der Spannbacken 5 zur Folge, wenn der Futterkolben 6 axial bewegt wird. Über den gesamten Arbeitshub des Spannfutters sind Antriebsteil 8 und Abtriebsteil 9 miteinander gekuppelt. Dies ist in Fig. 3 dargestellt.

Wenn nunmehr die Spannbacke 5 entweder im Verhältnis zur Keilstange 7 radial nach innen oder außen versetzt oder aus dem Futterkörper 1 herausgenommen werden soll, um durch Umdrehen einen Wechsel der Spannungsart (Außenspannung oder Innenspannung) zu erzielen oder durch eine andere Spannbacke ersetzt zu werden, muß die Keilverzahnung 9b außer Eingriff mit der Keilverzahnung 5a an der Spannbacke 5 gebracht werden.

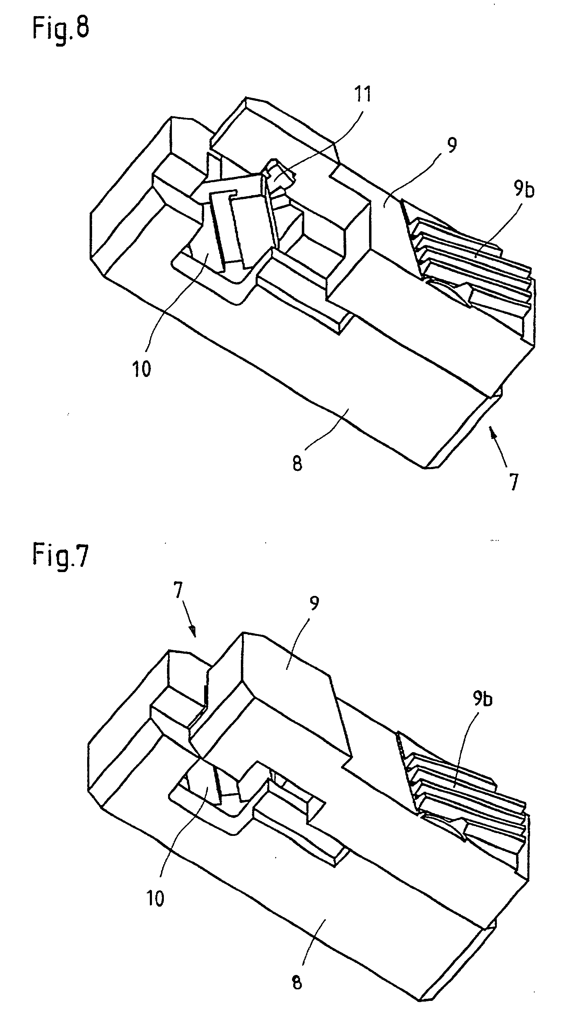

Zu diesem Zweck wird das Kupplungsstück 10 an einem Ende des Arbeitshubes in den Antriebsteil 8 der Keilstange 7 mittels eines Schlüssels S eingedrückt, wie dies die Fig. 7 und 8 zeigen. In eingedrücktem Zustand gibt das Kupplungsstück 10 die formschlüssige Verbindung von Antriebsteil und Abtriebsteil frei, so daß durch Verdrehen des Kupplungsstückes 10 das Abtriebsteil 9 auf dem in seiner Endstellung verharrenden Antriebsteil 8 bewegt werden kann. Zu diesem Zweck ist das Kupplungsstück mit einem Mitnehmer 11 versehen, der in das Abtriebsteil 9 eingreift und dieses relativ zum Antriebsteil 8 verschiebt. Hierdurch gelangt die Keilverzahnung 9b außer Eingriff mit der Keilverzahnung 5a der Spannbacke 5, so daß diese aus dem Futterkörper 1 herausgenommen werden kann. Diese Situation ist in Fig. 4 dargestellt.

Damit eine Entriegelung der Kupplung zwischen Antriebsteil 8 und Abtriebsteil 9 ausschließlich in der einen Endstellung des Arbeitshubes erfolgen kann, ist am Kupplungsstück 10 ein dessen Drehachse bildender Bolzen 12 ausgebildet, der beim Eindrücken des Kupplungsstückes 10 seitlich aus der Keilstange 7 herausragt. Ausschließlich in der einen Endstellung des Arbeitshubes ist im Futterkörper 1 eine Bohrung 1b vorgesehen, so daß der Bolzen 12 des Kupplungsstückes 10 in dieser Stellung verschoben werden kann.

Der Schlüssel S (Fig.10) wird in das Verbindungsstück eingeschoben, das durch eine hakenförmige Verbindung mit dem Kupplungsstück 10 formschlüssig verbunden ist. Zum Entkuppeln des Kupplungsstücks 10 wird das Verbindungsstück 14 so weit radial nach innen verschoben, daß eine Winkeldrehung des Kupplungsstücks 10 möglich ist. Ein Rastelement 16, beispielsweise eine Kugel, stellt sicher, daß der Schlüssel S nur dann aus dem Verbindungsstück 14 herausgezogen werden kann, wenn sich das Kupplungsstück 10 im gekoppelten Zustand befindet. Beim Kuppeln des Kupplungsstücks 10 wird das Verbindungsstück 14 so weit radial nach außen verschoben, daß das Rastelement 16 in einen Freiraum der Führungshülse 15 eintaucht und den Schlüssel freigibt.

### Bezugszeichenliste

- 1: Futterkörper
- 1a: Tasche
- 1 b: Bohrung
- 2: Deckel
- 3: Futterbefestigungsschraube
- 4: Führung
- 5: Spannbacke
- 5a: Keilverzahnung
- 6: Futterkolben
- 6a: Keilhaken
- 7: Keilstange
- 7a: Nut
- 8: Antriebsteil
- 8a: Aussparung
- 9: Abtriebsteil
- 9a: Aussparung
- 9b: Keilverzahnung
- 10: Kupplungsstück
- 11: Mitnehmer
- 12: Bolzen
- 14: Verbindungsstück
- 15: Führungshülse
- 16: Rastelement

- S: Schlüssel

## Patentansprüche

1. Kraftbetätigtes Keilstangenfutter für Drehmaschinen mit in einem Futterkörper (1) tangential geführten Keilstangen (7), die durch einen Antrieb synchron beweglich sind und die über eine auf ihrer Vorderseite ausgebildete Verzahnung (9b) mit radial beweglichen in dem Futterkörper (1) geführten Spannbacken (5) kuppelbar sind, wobei die Verzahnung (9b) jeder Keilstange (7) über ihren Arbeitshub hinaus in eine Stellung beweglich ist, in der sie außer Eingriff mit der Spannbacke (5) ist, so dass diese radial aus dem Futterkörper (1) herausnehmbar ist, wobei jede Keilstange (7) in einen mit dem Antrieb verbundenen Antriebsteil (8) und einen beweglich zu diesem angeordneten Abtriebsteil (9) geteilt ist, der die Verzahnung (9b) aufweist und an einem Ende des Arbeitshubes durch einen Schlüssel (S) relativ zum Antriebsteil (8) in die Aussereingriffstellung überführbar ist, und der Antriebsteil (8) und der Abtriebsteil (9) der Keilstange (7) innerhalb des Arbeitshubes durch ein Kupplungsstück (10) formschlüssig gekuppelt sind, **dadurch gekennzeichnet, dass** des Kupplungsstück (10) mit einem Mitnehmer (11) versehen ist, der in das Abtriebsteil (9) eingreift und dieses relativ zum Antriebsteil (8) in tangentialer Richtung verschiebt.

2. Keilstangenfutter nach Anspruch 1, **dadurch gekennzeichnet, dass** an dem Kupplungsstück (10) eine die Drehachse bildender Bolzen (12) ausgebildet ist, der bei Erreichen des einen Endes des Arbeitshubes aus der entsprechenden Lagerbohrung des Antriebsteils (8) heraustritt.

3. Keilstangenfutter nach einem der vorhergehenden Ansprüche, **dadurch gekennzeichnet, dass** der Bolzen (12) ausschließlich bei Erreichen des einen Endes des Arbeitshubes in eine Bohrung (1b) des Futterkörpers (1) eintreten kann.

## Claims

1. Power operated key bar chuck for lathes with key bars (7) which are guided tangentially in a chuck body (1), which can be synchronously moved by a drive and which can be coupled by a toothing (9b) formed on its front side to radially movable clamping jaws (5) guided in the chuck body (1), wherein the toothing (9b) of each key bar (7) can be moved beyond its working stroke into a position in which it is out of engagement with the clamping jaw (5), so that it can be radially removed from the chuck body (1), wherein each key bar (7) is divided into a drive section (8) connected to the drive and a driven section (9) arranged movably in relation to the drive section, which driven section exhibits the toothing (9b) and can be transferred at one end of the working stroke to the disengaged position by a key (S) relative to the drive section (8), and wherein the drive section (8) and driven section (9) of the key bar (7) within the working stroke are positively coupled by a coupling piece (10), **characterised in that** the coupling piece (10) is provided with a carrier (11) which engages in the driven section (9) and displaces it relative to the drive section (8) in the tangential direction.

2. Key bar chuck according to Claim 1, **characterised in that** a bolt (12) constituting the axis of rotation is formed on the coupling piece (10), which bolt, on reaching one end of the working stroke, escapes from the corresponding bearing hole of the drive section (8).

3. Key bar chuck according to any one of the preceding claims, **characterised in that** the bolt (12) can only enter a hole (1b) in the chuck body (1) when it reaches one end of the working stroke.

## Revendications

1. Mandrin à barres de calage actionné par une force et destiné à des tours, comportant des barres de calage (7) guidées tangentiellement dans un corps de mandrin (1) qui sont mobiles de façon synchrone par un entraînement et qui sont susceptibles d'être accouplées par une denture (9b) réalisée sur leur face avant avec des mâchoires de serrage (5) guidées en déplacement radial dans le corps de mandrin (1), la denture (9b) de chaque barre de calage (7) étant mobile au-delà de sa course de travail jusque dans une position dans laquelle elle est dégagée de la mâchoire de serrage (5), de sorte que celle-ci peut être extraite radialement hors du corps de mandrin (1), chaque barre de calage (7) étant subdivisée en une partie menante (8) reliée à l'entraînement et en une partie menée (9) agencée mobile par rapport à celle-ci et présentant la denture (9b) et étant susceptible d'être transférée, à une extrémité de la course de travail, par rapport à la partie menante (8) jusque dans la position de dégagement au moyen d'une clé (S), et la partie menante (8) et la partie menée (9) de la barre de calage (7) sont accouplées en coopération de formes à l'intérieur de la course de travail par un élément d'accouplement (10), **caractérisé en ce que** l'élément d'accouplement (10) est pourvu d'un entraîneur (11) qui s'engage dans la partie menée (9) et qui déplace celle-ci en direction tangentielle par rapport à la partie menante (8).

2. Mandrin à barres de calage selon la revendication 1, **caractérisé en ce qu'**un goujon (12) formant l'axe de rotation est réalisé sur l'élément d'accouplement (10), qui, lorsqu'il atteint l'une des extrémités de la course de travail, sort hors du perçage de montage correspondant de la partie menante (8).

3. Mandrin à barres de calage selon l'une des revendications précédentes, **caractérisé en ce que** le goujon (12) peut pénétrer dans un perçage (1b) du corps de mandrin (1) exclusivement lorsqu'il atteint l'une des extrémités de la course de travail.
